# FASCICULE DE BREVET EUROPEEN

(11) **EP 1 421 305 B1**
(45) Date de publication et mention de la délivrance du brevet: **02.07.2008**
(21) Numéro de dépôt: 02796292.7
(22) Date de dépôt: 09.08.2002
(51) Int. Cl.: F16K 1/30

(54) **ROBINET DE CONTROLE DU DEBIT D'UN FLUIDE EQUIPE D'UN LEVIER A PLUSIEURS POSITIONS STABLES**
MIT EINEM HEBEL MIT MEHREREN STABILEN POSITIONEN MONTIERTER FLUIDSTRÖMUNGSREGELHAHN
FLUID FLOW CONTROL COCK FITTED WITH A LEVER HAVING SEVERAL STABLE POSITIONS

(30) Priorité: 23.08.2001 FR 0111042
(43) Date de publication de la demande: 26.05.2004
(73) Titulaire: L'AIR LIQUIDE, Société Anonyme pour l'Etude et l'Exploitation des Procédés Georges Claude, 75007 Paris (FR)
(72) Inventeur: LANG, Daniel, F-75007 Paris (FR); TAILLANDIER, Alain, F-75016 Paris (FR)
(74) Mandataire: Pittis, Olivier
(86) Numéro de dépôt international: PCT/FR2002/002844
(87) Numéro de publication internationale: WO 2003/019056

(56) Documents cités:
- EP-A- 0 990 825
- GB-A- 2 085 567
- US-A- 4 648 431

## Description

La présente invention concerne un robinet de contrôle du débit d'un fluide, en particulier d'un gaz sous pression, équipé d'un levier pivotant autour d'un axe de pivotement entre au moins trois positions stables et angulairement décalées les unes des autres, à savoir une position de repos, une position intermédiaire libératoire et une position active, ainsi qu'un récipient de gaz, tel une bouteille de gaz sous pression, équipé d'un tel robinet.

Les gaz industriels et médicaux sont habituellement conditionnés dans des récipients, tels des bouteilles de gaz, dans lesquels le gaz est conservé sous une pression pouvant atteindre 200 à 300 bars, voire davantage.

Lorsque l'on souhaite utiliser du gaz sous pression, il est nécessaire de l'extraire du récipient dans lequel il a été conditionné et on utilise pour ce faire un dispositif appelé robinet permettant de contrôler la sortie et le débit du fluide du récipient.

Il existe également des robinets intégrant une partie détendeur permettant d'opérer une réduction de la pression du fluide sortant du récipient. On parle alors d'ensemble robinet à détendeur intégré ; un tel ensemble est décrit par les documents EP-A-747796 ou EP-A-275242.

De nombreux robinets connus pour bouteilles de gaz présentent une architecture commune et très simple, à savoir qu'ils se composent d'un corps de robinet, généralement en métal ou alliage métallique, tel le laiton, comportant notamment : une embase filetée permettant sa fixation sur le col d'une bouteille de gaz par exemple ; un raccord de sortie de gaz par lequel le gaz peut être évacué vers le lieu où il doit être utilisé ; un passage interne, aménagé dans le corps de robinet, reliant fluidiquement un orifice d'entrée de gaz porté par l'embase et par lequel le gaz sortant de la bouteille entre dans le corps de robinet, et un orifice de sortie de gaz porté par le raccord de sortie et par lequel le gaz ayant cheminé dans le corps du robinet ressort dudit corps de robinet et est évacué ensuite, via une canalisation de gaz par exemple, vers son site d'utilisation ; un système de contrôle du débit pour contrôler le débit de gaz dans le passage interne aménagé dans le corps du robinet ; et un moyen de manipulation actionnable par un opérateur et coopérant avec le système de contrôle du débit pour autoriser ou interdire, selon les souhaits de l'opérateur, le cheminement du gaz dans le passage interne et donc sa sortie par le raccord de sortie.

L'ensemble comprenant l'orifice d'entrée, le passage interne et l'orifice de sortie est parfois appelé circuit de distribution de gaz.

La plupart du temps, le corps de robinet comprend aussi un raccord de remplissage de gaz avec un orifice de remplissage communiquant fluidiquement, via un conduit de remplissage également aménagé dans le corps du robinet, avec le passage interne de gaz de manière à pouvoir effectuer un remplissage de la bouteille sans avoir à démonter le robinet.

L'ensemble comprenant l'orifice de remplissage et le conduit de remplissage relié au passage Interne est parfois appelé circuit de remplissage de gaz.

Dans la majorité des cas, le moyen de manipulation équipant les robinets de gaz existant est ou comprend un volant de manipulation rotatif actionnable manuellement par l'opérateur en rotation autour de son axe longitudinal, c'est-à-dire qu'un mouvement de vissage opéré par l'opérateur sur le volant va engendrer une interruption, partielle ou totale, du débit de gaz dans le passage interne du corps par obturation de ce passage interne par le biais du système de contrôle du débit, alors qu'un mouvement de dévissage opéré sur le volant va autoriser un débit, partiel ou total, de gaz dans le passage interné de gaz.

De tels volants de manipulation sont décrits notamment par les documents suivants : US-A-4,103,806, EP-A-629812, WO-A-82/01580.

Par ailleurs, certains robinets ou ensembles robinets avec détendeurs Intégrés comportent un moyen de manipulation constitué d'un levier pivotant autour d'un axe de pivotement comportant une extrémité de manipulation permettant la saisie manuelle du levier par l'opérateur en vue de son pivotement angulaire et une extrémité active, portant l'axe de pivotement, coopérant directement ou indirectement avec le système de contrôle du débit de gaz de manière à autoriser ou, à l'inverse, interdire le cheminement du gaz dans le passage interne de gaz entre l'orifice d'entrée et l'orifice de sortie porté par le raccord de sortie.

De tels dispositifs à leviers de manipulation sont décrits notamment par les documents suivants : EP-A-747796, EP-A-990825, FR-A-2801689, EP-A-1026438 et GB-A-723828.

Le document US 4,648,431 décrit un robinet de remplissage pour conteneurs destinés à être remplis avec du gaz comprenant un levier de commande d'une valve dans lequel le levier peut être disposé dans une première position verticale de fermeture de la valve, une deuxième position d'ouverture de la valve décalée de 90° d'un premier côté par rapport à la première position, et une position de mise à l'air du circuit interne du robinet décalée de 90° de l'autre côté par rapport à la première position.

L'utilisation d'un levier pivotant plutôt que d'un volant rotatif présente notamment l'avantage d'une manipulation plus rapide par l'utilisateur.

De plus, la position du levier reflète immédiatement l'état du robinet, c'est-à-dire qu'un levier en position de repos correspond à une interruption du passage de gaz, alors q'un levier en position active correspond à un passage de gaz. Ceci évite ou minimise les risques d'erreurs pour l'opérateur en accroissant la sécurité d'utilisation.

Le but de la présente invention est d'améliorer les robinets du type à actionnement par levier.

En effet, dans les robinets à levier existants, le levier pivote habituellement entre deux positions stables angulairement décalées, à savoir :
- une première position dite 'position de repos' dans laquelle le cheminement du gaz dans le circuit de distribution du corps de robinet est totalement interrompue, et
- une seconde position dite 'position active' ou 'position de libération de gaz' dans laquelle le cheminement du gaz à travers le circuit de distribution du corps de robinet est autorisée, c'est-à-dire n'est plus interrompue.

Le passage de la position de repos à la position active se fait par actionnement en pivotement du levier par l'opérateur depuis la première position angulaire correspondant à la position de repos du levier jusqu'à la seconde position angulaire correspondant à la position active.

L'actionnement du levier engendre une coopération, directe ou indirecte, du levier, via son extrémité active, avec le système de contrôle du débit de gaz pour autoriser le passage du gaz par ouverture du passage qui était jusque là obturé par le système de contrôle du débit de gaz.

Par ailleurs, le passage de la position active à la position de repos se fait par actionnement inverse du levier par l'opérateur.

Ceci est clairement expliqué par le document EP-A-747796 qui montre un robinet détendeur à levier pivotante entre deux positions extrêmes d'ouverture ou de fermeture dans lesquelles le levier est maintenu de façon stable et pratiquement insensible aux vibrations.

Or, il a été constaté que, pour assurer un meilleur maintien en position de repos de manière à assurer une coupure efficace du débit de gaz, il était souhaitable de maintenir le levier solidaire du corps du robinet par des moyens de fixation appropriés, de manière à éviter une ouverture inopinée du gaz par actionnement involontaire du levier.

De là, il a été proposé de doter le levier d'un mécanisme d'accrochage permettant de le solidariser au corps du robinet en garantissant ainsi un débit de gaz nul dans le passage interne de gaz, lorsque le levier est maintenu dans sa position de repos.

Toutefois, en pratique, il a été constaté qu'avec un tel mécanisme d'accrochage, des problèmes pouvaient survenir lors du passage de la position de repos à la position active.

En effet, si le mécanisme d'accrochage assure un maintien top efficace du levier solidaire du corps de robinet, alors l'opérateur peut avoir des difficultés à le désolidariser lorsqu'il souhaite le faire pivoter et ouvrir le gaz, ce qui peut conduire l'opérateur à exercer une manipulation violente du levier qui peut engendrer une ouverture trop rapide du débit de gaz et ce, avec les risques et problèmes habituels résultant d'une manipulation trop brusque d'un gaz sous pression. Cet inconvénient est d'autant accentué que le levier est accroché et maintenu en position de repos très près du corps de robinet car alors l'espacement pour la main ou les doigts de l'opérateur peut ne pas être suffisant, surtout s'il porte des gants de travail.

A l'inverse, si le mécanisme d'accrochage assure un maintien insuffisant du levier, alors il ne remplira pas correctement son rôle.

Le but de l'invention alors est de proposer un robinet à levier amélioré permettant de résoudre le problème rencontré lors du passage de la position de repos à la position active, en particulier lorsque le levier est maintenu solidaire du robinet dans sa position de repos par un mécanisme d'accrochage.

La solution de l'invention est alors un robinet permettant de contrôler le débit d'un fluide sous pression, en particulier d'un gaz, comprenant un corps de robinet comprenant :
- un circuit interne de distribution de fluide comprenant un orifice d'entrée de fluide, un orifice de sortie de fluide et un passage interne de fluide reliant fluidiquement l'orifice d'entrée de fluide à l'orifice de sortie de fluide,
- des moyens de contrôle du débit de fluide agissant sur le passage interne de fluide pour permettre ou pour empêcher une circulation de fluide dans ledit passage entre l'orifice d'entrée de fluide et l'orifice de sortie de fluide,
- des moyens de manipulation, actionnable manuellement par un opérateur, coopérant, directement ou indirectement, avec les moyens de contrôle du débit de fluide pour permettre ou pour empêcher ladite circulation de fluide dans ledit passage, et dans lequel les moyens de manipulation comprennent un levier d'axe (YY) pivotant autour d'un axe de pivotement (XX), et mobile entre au moins trois positions stables et angulairement décalées les unes des autres, lesdites trois positions stables étant au moins :

- une position de repos dans laquelle le levier est maintenu, directement ou indirectement, fixé et solidaire du corps du robinet et dans laquelle les moyens de contrôle du débit de fluide obturent totalement le passage interne de fluide de manière à assurer un débit nul de fluide dans ledit passage interne de fluide,
- une position intermédiaire libératoire, dans laquelle l'axe (YY) du levier est décalé d'un angle α positif et non nul par rapport à l'axe (YY) du levier en position de repos, dans laquelle le levier est désolidarisé du corps du robinet et dans laquelle les moyens de contrôle du débit de fluide obturent totalement le passage interne de fluide de manière à assurer un débit nul de fluide dans ledit passage interne de fluide, et
- une position active, dans laquelle l'axe (YY) du levier est décalé d'un angle β positif et non nul par rapport à l'axe (YY) du levier en position intermédiaire libératoire, dans laquelle le levier est désolidarisé du corps du robinet et dans laquelle les moyens de contrôle du débit de fluide n'obturent plus le passage interne de fluide de manière à assurer une circulation du fluide à un débit non nul dans ledit passage interne.

Par position stable, on entend une position angulaire par rapport à l'axe (XX), dans laquelle l'axe (YY) du levier est à l'équilibre, c'est-à-dire qu'il se maintient ou est maintenu dans cette position de façon durable sans pratiquement s'en écarter.

Selon le cas, le robinet de l'invention peut comprendre l'une ou plusieurs des caractéristiques techniques suivantes :
- les moyens de contrôle du débit de fluide comprennent un moyen d'obturation permettant d'obturer le passage interne de fluide, de préférence le moyen d'obturation est un clapet normalement repoussé contre son siège de clapet par un moyen élastique, tel un ressort.
- le levier pivotant comporte une extrémité de manipulation par laquelle l'opérateur peut saisir manuellement le levier et une extrémité active, située du côté de l'axe de pivotement (XX), venant coopérer, directement ou indirectement, avec le moyen d'obturation du passage interne de fluide.
- le levier pivotant coopère, via son extrémité active, avec les moyens de contrôle du débit de fluide par l'intermédiaire d'au moins une pièce mobile en translation dans un logement situé entre ladite extrémité active du levier et le moyen d'obturation du passage interne de fluide.
- le corps de robinet est revêtu d'une structure externe formant un habillage périphérique audit corps, ladite structure externe étant solidaire du corps, et en ce qu'en position de repos, le levier est maintenu indirectement solidaire du corps du robinet en étant fixé à ladite structure externe par l'intermédiaire de moyens d'accrochage.
- en position de repos, le levier est rendu solidaire du corps du robinet par l'intermédiaire de moyens d'accrochage, en étant maintenu fixé audit corps ou à une structure externe formant un habillage périphérique dudit corps ou une pièce de raccordement portée par ledit corps.
- en position intermédiaire libératoire, l'axe (YY) du levier est décalé angulairement d'un angle α compris entre 10° et 70° par rapport à l'axe (YY) dudit levier en position de repos, de préférence un angle α compris entre 20° et 50°.
- en position active, l'axe (YY) du levier est décalé d'un angle β compris entre 20° et 150° par rapport à l'axe (YY) dudit levier en position intermédiaire libératoire, de préférence un angle β compris entre 30° et 120°.
- lors du passage de la position intermédiaire libératoire à la position active, l'extrémité active du levier, située du côté de l'axe de pivotement (XX), comportant une portion formant came, vient coopérer avec le moyen d'obturation du passage interne de fluide par l'intermédiaire de la pièce mobile en translation dans le logement, en exerçant, via la partie formant came, une force de poussée sur la pièce mobile de manière à engendrer un mouvement en translation de ladite pièce mobile allant dans le sens tendant à éloigner ladite pièce mobile de ladite partie formant came, de manière à permettre une circulation d'un débit de fluide dans le circuit interne de distribution de fluide.
- l'orifice d'entrée de fluide est porté par une embase du corps comportant une filetage externe périphérique et l'orifice de sortie de fluide est porté par un raccord de sortie de fluide.
- il comporte, en outre, un manomètre relié au circuit interne de distribution de fluide par une prise de pression aménagée dans le corps de manière à faire communiquer fluidiquement ledit manomètre et ledit circuit interne de distribution de fluide.
- il comporte, en outre, un raccord de remplissage comportant un orifice de remplissage en communication fluidique avec le circuit interne de distribution de fluide par l'intermédiaire d'un circuit de remplissage circuit interne de distribution de fluide.
- il comporte, en outre, une structure externe rigide formant un habillage périphérique d'au moins une partie du robinet, ladite structure étant portée et solidaire dudit corps, de préférence la structure externe rigide formant un habillage périphérique est formé d'un matériau polymère mis en forme et durci.
- en position de repos, le levier est maintenu solidaire de la structure externe rigide formant un habillage périphérique par l'intermédiaire de moyens d'accrochage comportant une tête sphérique portée par le levier et un logement complémentaire porté par la structure externe, ledit logement ayant un dimensionnement et une forme adaptés à la réception et au maintien solidaire en son sein de ladite tête sphérique portée par le levier.

L'invention porte aussi sur un récipient de fluide sous pression équipé d'un robinet selon l'invention, de préférence le récipient est une bouteille de gaz.

Le robinet de l'invention est particulièrement bien adapté à une utilisation dans le domaine du soudage pour le conditionnement de gaz à des pressions supérieures à 100 bars, typiquement entre 150 et 350 bars, mais peut aussi être utilisé dans les domaines des gaz spéciaux (laboratoire, calibrage...), médical, électronique, alimentaire...

Le robinet de l'invention présente de nombreux avantages, notamment une facilité et un confort accrus d'utilisation et une rapidité d'ouverture et de fermeture sans risque, donc en toute sécurité.

Un mode de réalisation du robinet de l'invention va maintenant être décrit plus en détail, en référence aux figures annexées.

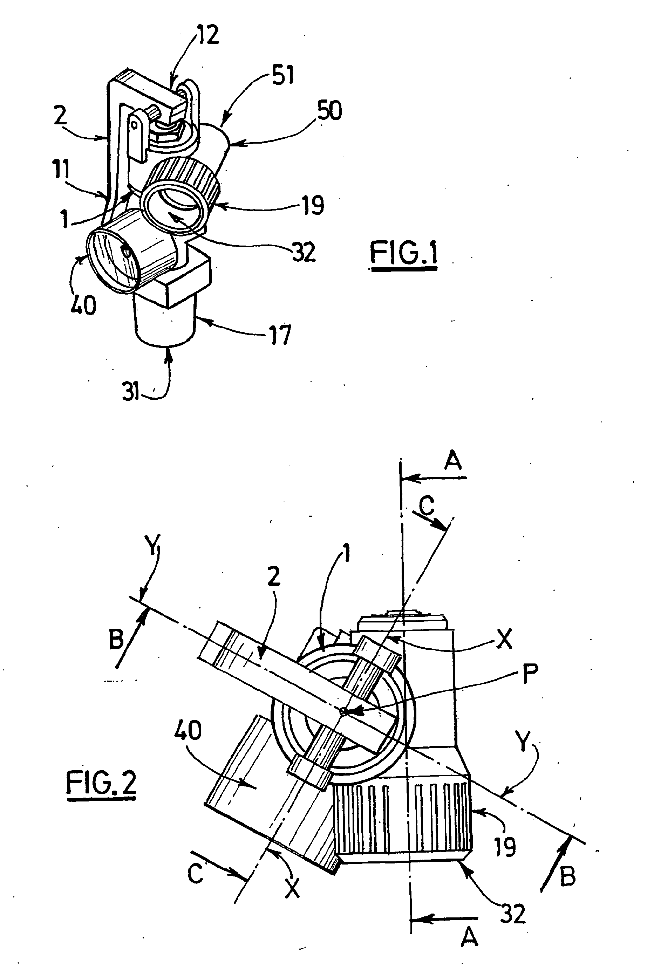

La figure 1 représente une vue tridimensionnelle d'un mode de réalisation d'un robinet selon l'invention où l'on voit le corps 1 de robinet, généralement en métal ou en alliage métallique, tel du laiton, avec une embase 17 destinée à être fixée par le biais du filetage 18 externe périphérique sur une bouteille de gaz par exemple, l'embase 17 portant un orifice d'entrée 31 de fluide permettant l'entrée du gaz sous pression dans le corps 1, lequel assure son acheminement, via un circuit interne de distribution 3, 31, 32 de gaz, jusqu'à l'orifice de sortie 32 porté par le raccord de sortie 19 auquel peut venir se raccorder une prise utilisateur.

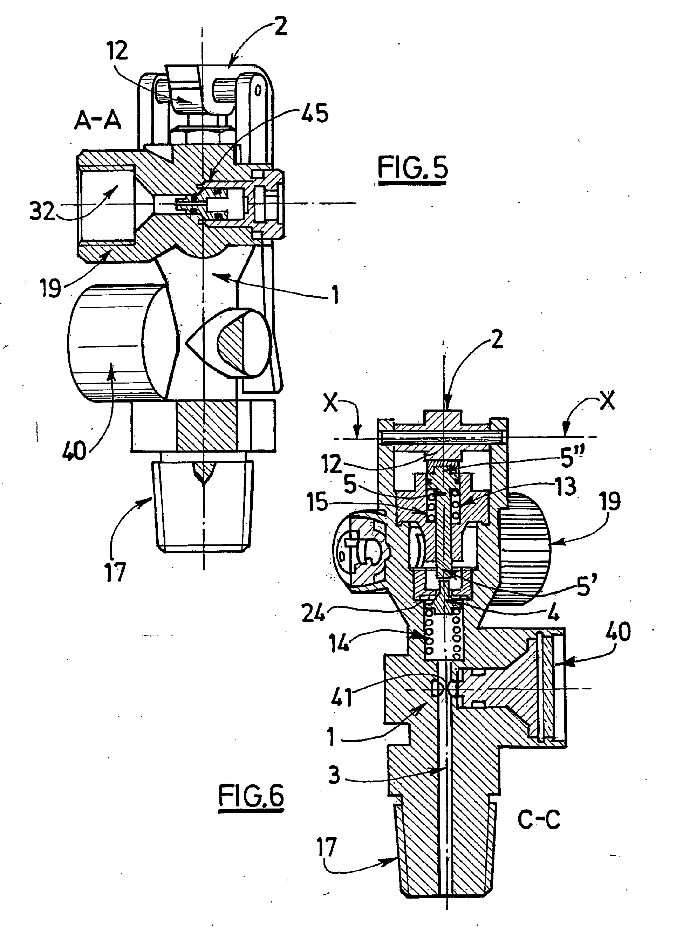

Le corps 1 comprend aussi un manomètre 40 relié au circuit interne 3, 31, 32 de distribution de fluide par une prise de pression 41 aménagée dans le corps 1 de manière à faire communiquer fluidiquement ledit manomètre 40 et le passage interne 3 du circuit interne de distribution de fluide et permettre ainsi une mesure et une indication de la pression du gaz circulant dans le corps 1 de robinet, comme détaillé sur la figure 6.

Le corps 1 comporte, en outre, un raccord de remplissage 50 comportant un orifice de remplissage 51 en communication fluidique avec le circuit interne de distribution 3, 31, 32 par l'intermédiaire d'un circuit de remplissage 52 et permettant le remplissage de la bouteille, lorsqu'elle est vide, avec du gaz sous pression et ce, sans rendre obligatoire le démontage du robinet du récipient sur lequel il est monté.

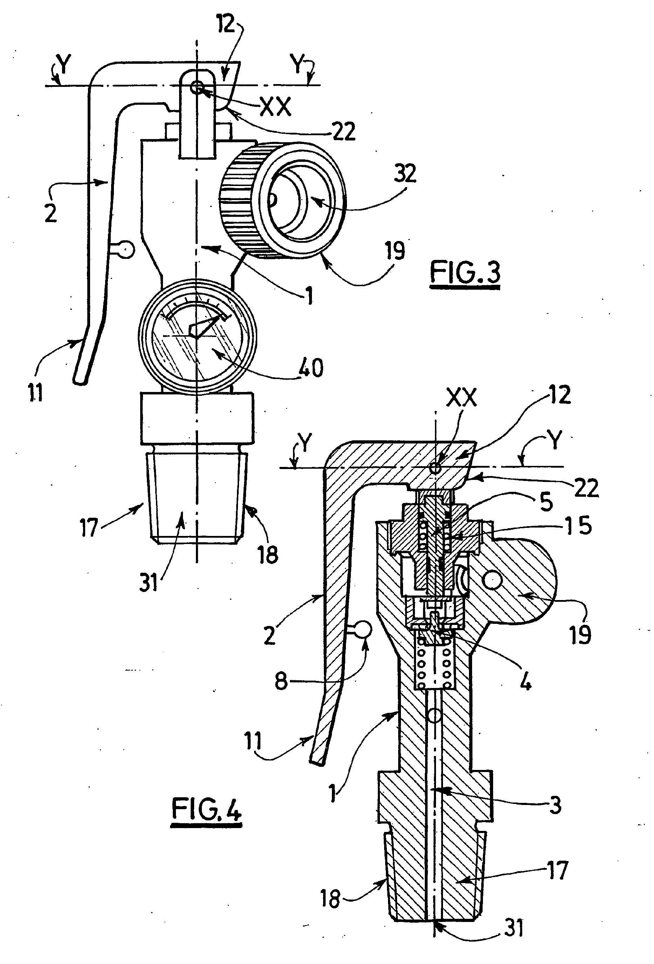

La figure 2 est une vue de dessus du robinet de la figure 1 et la figure 3 est une vue de côté du robinet de la figure 1.

La figure 4 est une vue en coupe selon le plan B-B représenté sur la figure 2 où l'on voit en détail que le corps 1 comporte un circuit interne de distribution de fluide 3, 31, 32 comprenant un orifice d'entrée 31 de fluide porté par l'embase 17, un orifice de sortie 32 de fluide porté par le raccord de sortie 19 et un passage interne 3 de fluide reliant fluidiquement l'orifice d'entrée 31 à l'orifice de sortie 32 servant à convoyer le gaz à l'intérieur du corps 1.

Des moyens de contrôle du débit 4 de fluide agissent sur le passage interne 3 de fluide pour permettre ou, à l'inverse, pour empêcher toute circulation de gaz dans le passage. Ces moyens de contrôle du débit 4 comportent, classiquement, un moyen d'obturation, tel un clapet mobile normalement repoussé contre un siège de clapet aménagé sur le passage 3 interne de gaz grâce à un moyen élastique, tel un ressort.

Selon l'invention, le corps 1 du robinet des moyens de manipulation comprenant une levier 2, actionnable manuellement par un opérateur, coopèrent, directement ou indirectement, avec les moyens de contrôle du débit de fluide pour permettre ou pour empêcher la circulation de fluide dans ledit passage en allant agir, directement ou indirectement, sur ledit moyen d'obturation 4.

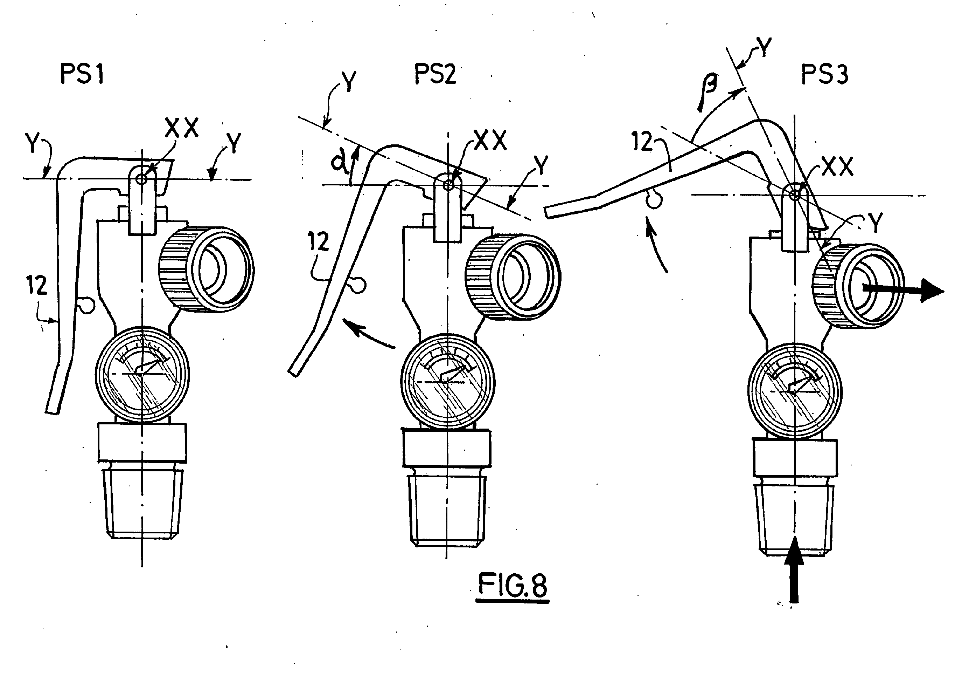

Plus précisément, les moyens de manipulation comprennent un levier 2 d'axe YY principal, pivotant autour d'un axe XX de pivotement, lequel levier est mobile et déplaçable entre au moins trois positions stables (PS1 à PS3) et angulairement décalées les unes des autres, comme montré sur la figure 8, à savoir :
- une première position stable (PS1) dite de repos, dans laquelle le levier 2 est maintenu, directement ou indirectement, fixé et solidaire du corps 1 du robinet et dans laquelle les moyens de contrôle du débit obturent totalement le passage interne 3 de manière à assurer et maintenir un débit nul de fluide dans ledit passage 3 interne, c'est-à-dire que dans cette position de repos le levier 2 est bloqué en position de repos et le gaz ne circule pas dans le circuit interne de gaz.
- une deuxième position stable (PS2) dite position intermédiaire libératoire, dans laquelle l'axe YY du levier 2 est décalé d'un angle α positif et non nul, par exemple un angle α de l'ordre de 30 à 45° par rapport à l'axe YY du levier 2 lorsque celui-ci est en position de repos, le sommet de l'angle α étant le point P d'intersection de l'axe XX avec l'axe YY, comme montré sur la figure 2. Dans cette position, le levier 2 est désolidarisé du corps 1 du robinet, c'est-à-dire libéré dudit corps, mais les moyens de contrôle du débit 4 de fluide continuent à assurer leur rôle en obturant totalement le passage interne 3. En d'autres termes, bien que le levier 2 ait été déplacé angulairement selon un arc de cercle d'angle α, dans cette deuxième position stable, le levier 2 n'agit pas encore sur les moyens de contrôle du débit 4 et ceux-ci continuent donc à empêcher toute circulation du fluide dans le passage 3 en direction de l'orifice de sortie 32, c'est-à-dire que le clapet 4 est toujours repoussé contre son siège ce qui obture le passage 3.
- une troisième position stable (PS3) dite position active, dans laquelle l'axe YY du levier 2 est décalé d'un angle β positif et non nul, par exemple un angle de 20° à 100° par rapport à l'axe YY du levier 2 dans sa position intermédiaire libératoire. En position active, le levier 2 est désolidarisé du corps 1 du robinet et les moyens de contrôle 4 du débit de fluide n'obturent plus le passage 3 interne de fluide, ce qui autorise une circulation du gaz à un débit non nul dans ledit passage 3 interne.

L'axe XX est défini comme étant l'axe de pivotement du levier 2 sur le corps 1 du robinet, comme illustré sur la figure 2.

Par ailleurs, la position du levier 2 au repos sert de référence pour la définition de l'axe YY de départ et des angles α et β. Pour plus de simplicité, on choisira l'axe YY comme montré sur la figure 2, les axes ; toutefois, pour définir l'axe du levier 2, on pourrait aussi choisir une autre droite passant par le point P et perpendiculaire à l'axe XX de pivotement car ce qui est primordial, c'est d'utiliser toujours le même référentiel-axial.

La figure 5 est un schéma en coupe selon le plan A-A de la figure 2 permettant de visualiser l'architecture du raccord de sortie 19 de gaz portant l'orifice de sortie 32. Sur cette figure, on voit aussi un clapet 45 mobile en translation.

En outre, la figure 6 est un schéma en coupe selon le plan C-C de la figure 2 permettant de comprendre comment le levier 2 coopère avec les moyens de contrôle de débit, en particulier le clapet 4, par l'intermédiaire de la pièce 5 mobile dans son logement 15, laquelle est normalement repoussée dans la direction de l'extrémité 12 active du levier 2 sous l'influence d'une force de poussée élastique qui lui est conférée par un moyen à ressort 13 disposé dans le logement 15.

Plus précisément, lorsque l'opérateur manipule le levier 2 pour le faire passer de la première position angulaire dite de repos à la deuxième position angulaire dite position intermédiaire libératoire, l'extrémité active 12 du levier 2 ne vient pas exercer de poussée (ou alors une poussée très faible) sur la pièce 5 mobile qui reste donc en position et le clapet 4 reste collé à son siège 24 sous l'influence de la force de poussée conférée par le ressort 14, ce qui maintient le passage 3 de gaz obturé.

Par contre, lorsque l'opérateur manipule le levier 2 pour le faire passer de la deuxième position angulaire dite position intermédiaire libératoire à la troisième position dite position active, l'extrémité active 12 du levier 2 qui pivote autour de l'axe XX vient agir, telle une came, sur l'extrémité amont 5" de la pièce 5 mobile en y exerçant une force de poussée supérieure à celle inverse du ressort 13, ce qui provoque alors un déplacement en translation de la pièce 5 mobile dans son logement 15, avec compression du ressort 13. Ce déplacement de la pièce mobile 5 engendre alors un décollement du clapet 4 de son siège 24 sous l'influence de la force de poussée conférée audit clapet 4 par l'extrémité aval 5' de la pièce mobile 5, cette force de poussée étant supérieure à celle inverse du ressort 14. Ce décollement du clapet 4 de son siège va alors libérer le passage 3 et ainsi permettre au gaz de circuler en direction de l'orifice de sortie 32 du raccord 19.

De préférence, le corps 1 de robinet est revêtu d'une structure externe 25 formant un habillage périphérique partiel ou total dudit corps 1 et solidaire dudit corps 1 en y étant fixée. La structure externe rigide 25 est formée par exemple de plusieurs sous-parties constituées d'un matériau polymère mis en forme et durci, par exemple deux demi-coques en plastique rigide assemblées l'une à l'autre de manière à habiller le corps 1 du robinet pour lui donner une forme agréable à regarder (design).

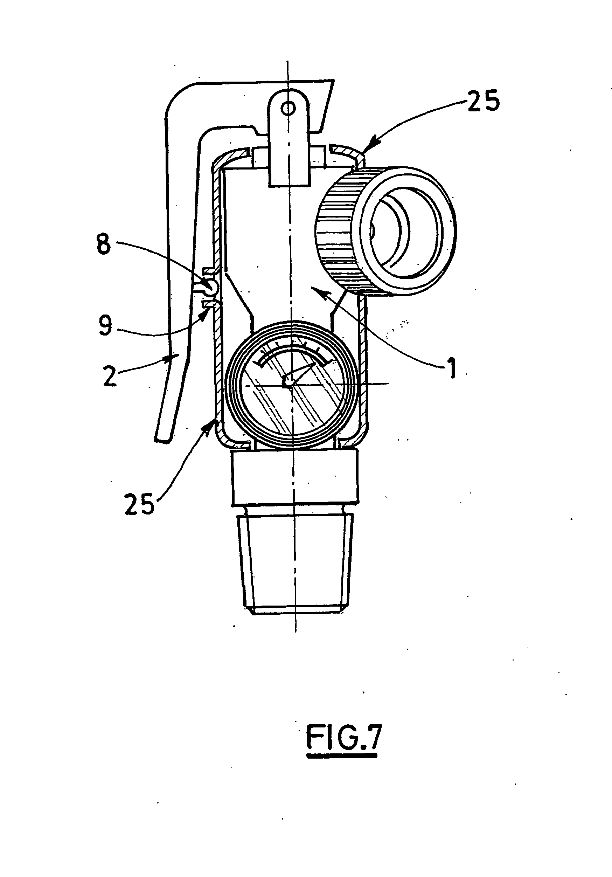

Comme schématisé sur la figure 7, en position de repos, le levier 2 est maintenu indirectement solidaire du corps 1 du robinet en étant fixé à ladite structure externe 25 (vue en coupe sur fig. 7) par l'intermédiaire de moyens d'accrochage 8, 9 comprenant un plot à tête sphérique 8 portée par le levier 2 et un réceptacle à plot complémentaire 9, tel un logement, porté par la structure externe 25 ayant un dimensionnement et une forme adaptés à la réception et au maintien solidaire en son sein dudit plot à tête sphérique 8 portée par le levier 2.

En position de repos, le plot à tête sphérique 8 du levier 2 vient s'engager solidairement dans le réceptacle à plot complémentaire 9 de manière à assurer un maintien fixe du levier dans sa position de repos et à éviter ainsi toute ouverture inopinée ou accidentelle du débit.

A l'inverse, en position intermédiaire et en position active, le plot 8 est désengagé du réceptacle complémentaire 9, ce qui permet au levier de pivoter.

Le robinet de l'invention est utilisable sur des bouteilles de gaz mais peut aussi être utilisé sur d'autres conteneurs ou récipients de gaz sous pression, ainsi que pour équiper une canalisation de fluide ou un réseau de canalisations.

## Revendications

1. Robinet permettant de contrôler le débit d'un fluide sous pression comportant un corps (1) de robinet comprenant :
- un circuit interne de distribution de fluide (3, 31, 32) comprenant un orifice d'entrée (31) de fluide, un orifice de sortie (32) de fluide et un passage interne (3) de fluide reliant fluidiquement l'orifice d'entrée (31) de fluide à l'orifice de sortie (32) de fluide,
- des moyens de contrôle du débit (4) de fluide agissant sur le passage interne (3) de fluide pour permettre ou pour empêcher une circulation de fluide dans ledit passage (3) entre l'orifice d'entrée de fluide (31) et l'orifice de sortie (32) de fluide,
- des moyens de manipulation, actionnable manuellement par un opérateur, coopérant, directement ou indirectement, avec les moyens de contrôle (4) du débit de fluide pour permettre ou pour empêcher ladite circulation de fluide dans ledit passage (3),
et dans lequel les moyens de manipulation comprennent un levier (2) d'axe (YY) pivotant autour d'un axe de pivotement (XX), et mobile entre au moins trois positions stables (PS1, PS2, PS3) et angulairement décalées les unes des autres, lesdites trois positions stables étant au moins :
- une position de repos (PS1) dans laquelle le levier (2) est maintenu, directement ou indirectement, fixé et solidaire du corps (1) du robinet et dans laquelle les moyens de contrôle du débit (4) de fluide obturent totalement le passage interne (3) de fluide de manière à obtenir un débit nul de fluide dans ledit passage (3) interne,
- une position intermédiaire libératoire (PS2), dans laquelle l'axe (YY) du levier (2) est décalé d'un angle α positif et non nul par rapport à l'axe (YY) du levier (2) en position de repos, dans laquelle le levier (2) est désolidarisé du corps (1) du robinet et dans laquelle les moyens de contrôle du débit (4) de fluide obturent totalement le passage interne (3) de fluide de manière à assurer un débit nul de fluide dans ledit passage (3) interne de fluide, et
- une position active (PS3), dans laquelle l'axe (YY) du levier (2) est décalé d'un angle β positif et non nul par rapport à l'axe (YY) du levier (2) en position intermédiaire libératoire, dans laquelle le levier (2) est désolidarisé du corps (1) du robinet et dans laquelle les moyens de contrôle (4) du débit de fluide n'obturent plus le passage (3) interne de fluide de manière à assurer une circulation du fluide à un débit non nul dans ledit passage (3) interne.

2. Robinet selon la revendication 1, **caractérisé en ce que** les moyens de contrôle (4) du débit de fluide comprennent un moyen d'obturation (4) permettant d'obturer le passage interne de fluide, de préférence le moyen d'obturation (4) est un clapet.

3. Robinet selon l'une des revendications 1 ou 2, **caractérisé en ce que** le levier (2) comporte :
- une extrémité de manipulation (11) par laquelle l'opérateur peut saisir manuellement le levier (2) et
- une extrémité active (12), située du côté de l'axe de pivotement (XX), venant coopérer, directement ou indirectement, avec le moyen d'obturation (4) du passage interne (3) de fluide.

4. Robinet selon la revendication 3, **caractérisé en ce que** le levier (2) est maintenu fixé et solidaire du corps par l'intermédiaire de moyens d'accrochage portés par l'extrémité de manipulation (II).

5. Robinet selon la revendication 3 ou 4, **caractérisé en ce qu'**en position de repos (PS1) l'extrémité de manipulation (II) est située le long du corps (I) du robinet.

6. Robinet selon l'une des revendications 1 à 5, **caractérisé en ce que** le levier (2) pivotant coopère, via son extrémité active (12), avec les moyens de contrôle (4) du débit de fluide par l'intermédiaire d'au moins une pièce mobile (5) en translation dans un logement (15) situé entre l'extrémité active (12) du levier (2) et le moyen d'obturation (4) du passage interne (3) de fluide.

7. Robinet selon l'une des revendications 1 à 6, **caractérisé en ce que** le corps (1) de robinet est revêtu d'une structure externe (25) formant un habillage périphérique audit corps (1), ladite structure externe (25) étant solidaire du corps (1), et **en ce qu'**en position de repos, le levier (2) est maintenu indirectement solidaire du corps (1) du robinet en étant fixé à ladite structure externe (25) par l'intermédiaire de moyens d'accrochage (8, 9).

8. Robinet selon l'une des revendications 1 à 7, **caractérisé en ce qu'**en position de repos, le levier (2) est rendu solidaire du corps (1) du robinet par l'intermédiaire de moyens d'accrochage (8, 9), en étant maintenu fixé audit corps (1) ou à une structure externe (25) formant un habillage périphérique dudit corps (1) ou une pièce de raccordement portée par ledit corps (1).

9. Robinet selon l'une des revendications 1 à 8, **caractérisé en ce qu'**en position intermédiaire libératoire, l'axe (YY) du levier est décalé angulairement d'un angle α compris entre 10° et 70° par rapport à l'axe (YY) dudit levier (2) en position de repos, de préférence un angle α compris entre 20° et 50°.

10. Robinet selon l'une des revendications 1 à 9, **caractérisé en ce qu'**en position active; l'axe (YY) du levier (2) est décalé d'un angle β compris entre 20° et 150° par rapport à l'axe (YY) dudit levier en position intermédiaire libératoire, de préférence un angle β compris entre 30° et 120°.

11. Robinet selon l'une des revendications 1 à 10, **caractérisé en ce que**, lors d'un pivotement du levier (2) de la position intermédiaire libératoire à la position active, l'extrémité active (12) du levier (2), située du côté de l'axe de pivotement (XX), comportant une portion formant came (22), vient coopérer avec le moyen d'obturation (4) du passage Interne (3) de fluide par l'intermédiaire de la pièce mobile (5) en translation dans le logement (15), en exerçant, via la partie formant came (22), une force de poussée sur la pièce mobile (5) de manière à engendrer un mouvement en translation de ladite pièce mobile (5) allant dans le sens tendant à éloigner ladite pièce mobile (5) de ladite partie formant came (22), de manière à permettre une circulation d'un débit non nul de fluide dans le circuit interne (3, 31, 32) de distribution de fluide.

12. Robinet selon l'une des revendications 1 à 11, **caractérisé en ce que** l'orifice d'entrée (31) de fluide est porté par une embase (17) du corps (1) comportant une filetage (18) externe périphérique et l'orifice de sortie (32) de fluide est porté par un raccord de sortie (19) de fluide.

13. Robinet selon l'une des revendications 1 à 12, **caractérisé en ce qu'**il comporte, en outre, un manomètre (40) relié au circuit interne (3, 31, 32) de distribution de fluide par une prise de pression (41) aménagée dans le corps (1) de manière à faire communiquer fluidiquement ledit manomètre (40) et le passage interne (3) dudit circuit interne de distribution de fluide.

14. Robinet selon l'une des revendications 1 à 13, **caractérisé en ce qu'**il comporte, en outre, un raccord de remplissage (50) comportant un orifice de remplissage (51) en communication fluidique avec le circuit interne de distribution (3, 31, 32) de fluide par l'intermédiaire d'un circuit de remplissage (52).

15. Robinet selon l'une des revendications 1 à 14, **caractérisé en ce qu'**il comporte, en outre, une structure externe rigide (25) formant un habillage périphérique d'au moins une partie du corps (1) du robinet, ladite structure (25) étant portée par et solidaire dudit corps (1), de préférence la structure (25) externe rigide formant un habillage périphérique est formé d'un matériau polymère mis en forme et durci.

16. Robinet selon l'une des revendications 1 à 15, **caractérisé en ce qu'**en position de repos, le levier (2) est maintenu solidaire de la structure (25) externe rigide formant un habillage périphérique par l'intermédiaire de moyens d'accrochage (8, 9) comportant un plot à tête sphérique (8) portée par le levier (2), et un réceptacle complémentaire (9) porté par la structure externe (25) ayant un dimensionnement et une forme adaptés à la réception et au maintien solidaire en son sein du plot à tête sphérique (8) portée par le levier (2).

17. Récipient de fluide sous pression équipé d'un robinet selon l'une des revendications 1 à 16, de préférence le récipient est une bouteille de gaz.

## Claims

1. Cock for controlling the flow rate of a pressurized fluid, comprising a cock body (1) comprising:
- an internal fluid-distribution circuit (3, 31, 32) comprising a fluid inlet orifice (31), a fluid outlet orifice (32) and an internal fluid passage (3) fluidically connecting the fluid inlet orifice (31) to the fluid outlet orifice (32),
- fluid flow control means (4) acting on the internal fluid passage (3) to allow or prevent fluid from flowing along said passage (3) between the fluid inlet orifice (31) and the fluid outlet orifice (32),
- manipulating means that can be actuated manually by an operator and collaborating directly or indirectly with the fluid flow control means (4) to allow or to prevent said circulation of fluid along said passage (3),
and in which the manipulating means comprise a lever (2) of axis (YY) pivoting about a pivot axis (XX) and able to move between at least three stable and angularly offset positions (PS1, PS2, PS3), said three stable positions being at least:
- a rest position (PS1) in which the lever (2) is held, directly or indirectly, fixed and secured to the body (1) of the cock and in which the fluid flow control means (4) completely shut off the internal fluid passage (3) so as to obtain a zero fluid flow rate in said internal passage (3),
- a liberating intermediate position (PS2) in which the axis (YY) of the lever (2) is offset by a positive and non-zero angle α with respect to the axis (YY) of the lever (2) in the rest position, in which position the lever (2) is detached from the body (1) of the cock and in which position the fluid control means (4) completely shut off the internal fluid passage (3) so as to provide a zero fluid flow rate in said internal fluid passage (3), and
- an active position (PS3) in which the axis (YY) of the lever (2) is offset by a positive and non-zero angle β with respect to the axis (YY) of the lever (2) in the liberating intermediate position, in which position the lever (2) is detached from the body (1) of the cock and in which position the fluid flow control means (4) no longer shut off the internal fluid passage (3) so as to allow fluid to circulate at a non-zero flow rate along said internal passage (3).

2. Cock according to Claim 1, **characterized in that** the fluid flow control means (4) comprise a shut-off means (4) allowing the internal fluid passage to be shut off, preferably the shut-off means (4) is a shutter.

3. Cock according to either of Claims 1 and 2,
**characterized in that** the lever (2) comprises:
- a manipulating end (11) via which the operator can manually grasp the lever (2), and
- an active end (12) situated on the same side as the pivot axis (XX), collaborating directly or indirectly with the shut-off means (4) for shutting off the internal fluid passage (3).

4. Cock according to Claim 3, **characterized in that** the lever (2) is held fixed and secured to the body by way of catching means borne by the manipulating end (11).

5. Cock according to Claim 3 or 4, **characterized in that**, in the rest position (PS1), the manipulating end (11) lies along the body (1) of the cock.

6. Cock according to one of Claims 1 to 5, **characterized in that** the pivoting lever (2) collaborates, via its active end (12), with the fluid flow control means (4) by way of at least one moving part (5) able to move in translation in a housing (15) situated between the active end (12) of the lever (2) and the shut-off means (4) shutting off the internal fluid passage (3).

7. Cock according to one of Claims 1 to 6, **characterized in that** the cock body (1) is covered with an external structure (25) forming peripheral cladding for said body (1), said external structure (25) being secured to the body (1), and **in that**, in the rest position, the lever (2) is held indirectly secured to the body (1) of the cock by being fixed to said external structure (25) by way of catching means (8, 9).

8. Cock according to one of Claims 1 to 7, **characterized in that**, in the rest position, the lever (2) is secured to the body (1) of the cock by way of catching means (8, 9) while at the same time being kept fixed to said body (1) or to an external structure (25) forming peripheral cladding of said body (1) or a connecting piece borne by said body (1).

9. Cock according to one of Claims 1 to 8, **characterized in that**, in the liberating intermediate position, the axis (YY) of the lever is angularly offset by an angle α of between 10° and 70° to the axis (YY) of said lever (2) in the rest position, preferably by an angle α of between 20° and 50°.

10. Cock according to one of Claims 1 to 9, **characterized in that**, in the active position, the axis (YY) of the lever (2) is offset by an angle β of between 20° and 150° to the axis (YY) of said lever in the liberating intermediate position, preferably by an angle β of between 30° and 120°.

11. Cock according to one of Claims 1 to 10, **characterized in that**, when the lever (2) is pivoted from the liberating intermediate position into the active position, the active end (12) of the lever (2), situated on the same side as the pivot axis (XX), comprising a cam-forming portion (22), collaborates with the shut-off means (4) for shutting off the internal fluid passage (3) by way of the moving part (5) able to move in translation in the housing (15) by exerting, via the cam-forming part (22), a pressure force on the moving part (5) so as to cause said moving part (5) to move in translation in the direction that tends to move said moving part (5) away from said cam-forming part (22) so as to allow a non-zero flow rate of fluid to circulate in the internal fluid-distribution circuit (3, 31, 32).

12. Cock according to one of Claims 1 to 11, **characterized in that** the fluid inlet orifice (31) is borne by a base (17) of the body (1) comprising a peripheral external screw thread (18) and the fluid outlet orifice (32) is borne by a fluid outlet coupling (19).

13. Cock according to one of Claims 1 to 12, **characterized in that** it further comprises a pressure gauge (40) connected to the internal fluid distribution circuit (3, 31, 32) by a pressure tapping (41) formed in the body (1) in such a way as to cause said pressure gauge (40) and the internal passage (3) of said internal fluid-distribution circuit to communicate fluidically.

14. Cock according to one of Claims 1 to 13, **characterized in that** it further comprises a filling coupling (50) comprising a fill orifice (51) in fluidic communication with the internal fluid-distribution circuit (3, 31, 32) by way of a filling circuit (52).

15. Cock according to one of Claims 1 to 14, **characterized in that** it further comprises a rigid external structure (25) forming peripheral cladding for at least part of the body (1) of the cock, said structure (25) being borne by and secured to said body (1), preferably the external rigid structure (25) forming peripheral cladding is formed of a shaped and cured polymer material.

16. Cock according to one of Claims 1 to 15, **characterized in that**, in the rest position, the lever (2) is kept secured to the rigid external structure (25) forming peripheral cladding by way of catching means (8, 9) comprising a stud with a spherical head (8) borne by the lever (2) and a complementary receptacle (9) borne by the external structure (25) sized and shaped to accommodate and hold securely within it the spherically-headed stud (8) borne by the lever (2).

17. Pressurized-fluid container equipped with a cock according to one of Claims 1 to 16, preferably the container is a gas cylinder.

## Patentansprüche

1. Hahn, der das Regeln der Strömung eines Druckfluids erlaubt, umfassend einen Hahnkörper (1), umfassend:
- einen internen Fluidverteilungskreis (3, 31, 32), umfassend eine Fluideingangsöffnung (31), eine Fluidausgangsöffnung (32) und einen internen Fluiddurchgang (3), der die Fluideingangsöffnung (31) flüssig mit der Fluidausgangsöffnung (32) verbindet,
- Mittel zur Regelung der Fluidströmung (4), die auf den internen Fluiddurchgang (3) wirken, um einen Fluidkreislauf im Durchgang (3) zwischen der Fluideingangsöffnung (31) und der Fluidausgangsöffnung (32) zu erlauben oder zu verhindern,
- Handhabungsmittel, die manuell durch eine Bedienungsperson betätigt werden können, welche direkt oder indirekt mit den Mitteln zur Regelung (4) der Fluidströmung zusammenwirken, um den Fluidkreislauf im Durchgang (3) zu erlauben oder zu verhindern,
und wobei die Handhabungsmittel einen Hebel (2) einer Achse (YY) umfassen, welche um eine Schwenkachse (XX) schwenkt und zwischen mindestens drei stabilen Positionen (PS1, PS2, PS3) mobil ist und die winklig voneinander mit Abstand angeordnet sind, wobei die drei stabilen Positionen mindestens sind:
- eine Ruheposition (PS1), wobei der Hebel (2) direkt oder indirekt fest und mit dem Hahnkörper (1) verbunden gehalten wird, und wobei die Mittel zur Regelung der Fluidströmung (4) den internen Fluiddurchgang (3) vollständig abschließen, um in dem internen Durchgang (3) eine Nullströmung des Fluids zu erhalten,
- eine befreiende Zwischenposition (PS2), wobei die Achse (YY) des Hebels (2) in einem positiven und Nichtnull-Winkel α bezüglich der Achse (YY) des Hebels (2) in der Ruheposition versetzt ist, wobei der Hebel (2) vom Hahnkörper (1) getrennt ist und wobei die Mittel zur Regelung der Fluidströmung (4) den internen Fluiddurchgang (3) vollständig abschließen, um eine Nullströmung in dem internen Durchgang (3) zu gewährleisten, und
- eine aktive Position (PS3), wobei die Achse (YY) des Hebels (2) in einem positiven und Nichtnull-Winkel β bezüglich der Achse (YY) des Hebels (2) in der befreienden Zwischenposition versetzt ist, wobei der Hebel (2) vom Hahnkörper (1) getrennt ist und wobei die Mittel zur Regelung der Fluidströmung (4) den internen Fluiddurchgang (3) nicht mehr abschließen, um einen Fluidkreislauf mit einer Nichtnullströmung in dem internen Durchgang (3) zu gewährleisten.

2. Hahn nach Anspruch 1, **dadurch gekennzeichnet, dass** die Mittel zur Regelung (4) der Fluidströmung ein Abschlussmittel (4) umfassen, welches das Abschließen des internen Fluiddurchgangs erlaubt, wobei das Abschlussmittel (4) vorzugsweise ein Ventil ist.

3. Hahn nach einem der Ansprüche 1 oder 2, **dadurch gekennzeichnet, dass** der Hebel (2) umfasst:
- ein Handhabungsende (11), wodurch die Bedienungsperson den Hebel (2) manuell ergreifen kann, und
- ein aktives Ende (12), das sich auf der Seite der Schwenkachse (XX) befindet, wobei es direkt oder indirekt mit dem Abschlussmittel (4) des internen Fluiddurchgangs (3) zusammenwirkt.

4. Hahn nach Anspruch 3, **dadurch gekennzeichnet, dass** der Hebel (2) mittels Befestigungsmitteln, die vom Handhabungsende (11) getragen werden, fest und mit dem Körper verbunden gehalten wird.

5. Hahn nach Anspruch 3 oder 4, **dadurch gekennzeichnet, dass** sich das Handhabungsende (11) in der Ruheposition (PS1) entlang dem Hahnkörper (1) befindet.

6. Hahn nach einem der Ansprüche 1 bis 5, **dadurch gekennzeichnet, dass** der schwenkende Hebel (2) über sein aktives Ende (12) mit den Mitteln zur Regelung (4) der Fluidströmung durch mindestens ein mobiles Teil (5) zusammenwirkt, das in Translation in einem Gehäuse (15) ist, welches sich zwischen dem aktiven Ende (12) des Hebels (2) und dem Abschlussmittel (4) des internen Fluiddurchgangs (3) befindet.

7. Hahn nach einem der Ansprüche 1 bis 6, **dadurch gekennzeichnet, dass** der Hahnkörper (1) mit einer externen Struktur (25) verkleidet ist, die für diesen Körper (1) eine periphere Verkleidung bildet, wobei die externe Struktur (25) mit dem Körper (1) verbunden ist, und **dadurch**, dass der Hebel (2) in der Ruheposition indirekt mit dem Hahnkörper (1) verbunden gehalten wird, welcher an der externen Struktur (25) über Befestigungsmittel (8, 9) angebracht ist.

8. Hahn nach einem der Ansprüche 1 bis 7, **dadurch gekennzeichnet, dass** der Hebel (2) in der Ruheposition mit dem Hahnkörper (1) über Befestigungsmittel (8, 9) verbunden wird, indem er an diesem Körper (1) oder an einer externen Struktur (25), die eine periphere Verkleidung des Körpers (1) oder ein vom Körper (1) getragenes Anschlussteil bildet, angebracht gehalten wird.

9. Hahn nach einem der Ansprüche 1 bis 8, **dadurch gekennzeichnet, dass** die Achse (YY) des Hebels in der befreienden Zwischenposition winklig um einen Winkel α zwischen 10° und 70° hinsichtlich der Achse (YY) des Hebels (2) in der Ruheposition, vorzugsweise um einen Winkel α zwischen 20° und 50°, versetzt ist.

10. Hahn nach einem der Ansprüche 1 bis 9, **dadurch gekennzeichnet, dass** die Achse (YY) des Hebels (2) in der aktiven Position um einen Winkel β zwischen 20° und 150° hinsichtlich der Achse (YY) des Hebels in der befreienden Zwischenposition, vorzugsweise um einen Winkel β zwischen 30° und 120°, versetzt ist.

11. Hahn nach einem der Ansprüche 1 bis 10, **dadurch gekennzeichnet, dass** während eines Schwenkens des Hebels (2) von der befreienden Zwischenposition zur aktiven Position das aktive Ende (12) des Hebels (2), das sich auf der Seite der Schwenkachse (XX) befindet, die einen Nocken (22) bildenden Abschnitt aufweist, mit dem Abschlussmittel (4) des internen Fluiddurchgangs (3) durch das mobile Teil (5) in Translation im Gehäuse (15) zusammenwirkt, indem über den Nocken (22) bildenden Teil eine Stoßkraft auf das mobile Teil (5) ausgeübt wird, um so eine Bewegung in Translation des mobilen Teils (5) zu erzeugen, die in der Richtung verläuft, die dazu neigt, das mobile Teil (5) von dem Nocken (22) bildenden Teil zu entfernen, um einen Kreislauf einer Nichtnull-Fluidströmung im internen Kreis (3, 31, 32) zur Fluidverteilung zu erlauben.

12. Hahn nach einem der Ansprüche 1 bis 11, **dadurch gekennzeichnet, dass** die Fluideingangsöffnung (31) von einem Sockel (17) des Körpers (1) getragen wird, der ein externes peripheres Gewinde (18) umfasst, und dass die Fluidausgangsöffnung (32) von einem Fluidausgangsanschluss (19) gehalten wird.

13. Hahn nach einem der Ansprüche 1 bis 12, **dadurch gekennzeichnet, dass** er des Weiteren ein Manometer (40) umfasst, das mit dem internen Kreis (3, 31, 32) zur Fluidverteilung durch einen Entnahmepunkt (41), der im Körper (1) angeordnet ist, um das Manometer (40) mit dem internen Durchgang (3) des internen Kreises zur Fluidverteilung flüssig kommunizieren zu lassen, verbunden ist.

14. Hahn nach einem der Ansprüche 1 bis 13, **dadurch gekennzeichnet, dass** er des Weiteren einen Füllstutzen (50) umfasst, der eine Füllöffnung (51) umfasst, die mit dem internen Kreis zur Verteilung (3, 31, 32) von Fluid durch einen Füllkreis (52) in flüssiger Kommunikation ist.

15. Hahn nach einem der Ansprüche 1 bis 14, **dadurch gekennzeichnet, dass** er des Weiteren eine externe steife Struktur (25) umfasst, die eine periphere Verkleidung aus mindestens einem Teil des Hahnkörpers (1) bildet, wobei die Struktur (25) von dem Körper (1) getragen wird und mit diesem verbunden ist, wobei die externe steife Struktur (25), die eine periphere Verkleidung bildet, vorzugsweise aus einem geformten und ausgehärteten Polymermaterial gebildet ist.

16. Hahn nach einem der Ansprüche 1 bis 15, **dadurch gekennzeichnet, dass** der Hebel (2) in der Ruheposition mit der externen steifen Struktur (25) verbunden gehalten wird, welche mittels Befestigungsmitteln (8, 9), die einen Kontakt mit sphärischem Kopf (8) umfassen, der vom Hebel (2) getragen wird, eine periphere Verkleidung bildet, und wobei ein komplementärer Behälter (9), der von der externen Struktur (25) getragen wird, deren Maß und Form zum Aufnehmen und zum Halten in Verbindung in ihrer Mitte des Kontaktes mit sphärischem Kopf (8), der von dem Hebel (2) getragen wird, angepasst ist.

17. Gefäß für Druckfluid, das mit einem Hahn nach einem der Ansprüche 1 bis 16 ausgestattet ist, wobei das Gefäß vorzugsweise eine Gasflasche ist.
